# EUROPEAN PATENT APPLICATION

(11) **EP 4 236 418 A1**
(43) Date of publication of application: **30.08.2023**
(21) Application number: 20959709.5
(22) Date of filing: 26.10.2020
(51) Int. Cl.: H04W 16/32, H04W 36/28, H04W 72/04, H04W 92/10, H04W 92/20

(54) **BASE STATION, TERMINAL, AND COMMUNICATION METHOD**

(71) Applicant: NTT DOCOMO, INC., Tokyo 100-6150 (JP)
(72) Inventor: HARADA, Kouhei, Tokyo 100-6150 (JP); TANIGUCHI, Masato, Tokyo 100-6150 (JP); HANAKI, Akihito, Tokyo 100-6150 (JP); MIN, Tianyang, Tokyo 100-6150 (JP)
(74) Representative: Hoffmann Eitle
(86) International application number: PCT/JP2020/040155
(87) International publication number: WO 2022/091191

(57) **Abstract**

A base station includes: a reception unit configured to receive, from a source secondary node, a condition for changing a primary secondary cell group cell; and a transmission unit configured to transmit the condition to a target secondary node. The reception unit receives, from the target secondary node, a message including the condition and a configuration related to a primary secondary cell group cell after the change, and the transmission unit transmits the message to a terminal.

## Description

### [FIELD OF THE INVENTION]

The present invention relates to a base station, a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In the NR system, improvement of operation related to FR2 (Frequency range 2) usage, especially when multiple RATs (Radio Access Technologies) dual connectivity is applied, is being discussed. For example, a function of autonomously performing SN addition in a case where the terminal determines that the SN addition condition is satisfied by configuring SN (Secondary node) addition in advance in the network by CPA (Conditional PSCell Addition), is being discussed. In addition, a function of autonomously performing the change in a case where the terminal determines that the change execution condition is satisfied by configuring PSCell change in advance in the network by CPC (Conditional PSCell Change), is being discussed

### [Citation List]

### [Non-Patent Document]

[Non-Patent Document 1] 3GPP TS 38.300 V16.2.0 (2020-07)

### SUMMARY OF THE INVENTION

### [TECHNICAL PROBLEM]

In the conventional technology, when an RRC (Radio Resource Control) message for executing CPC is transmitted to a terminal, a specification change having an impact for introducing CPC, such as a message exchange between SNs on the network side or creation of an RRC message of another RAT, is required.

The present invention has been made in view of the above-described points, and it is an object of the present invention to implement a CPC (Conditional PSCell Change) in a simple and useful manner in a wireless communication system.

### [SOLUTION TO PROBLEM]

According to the disclosed technique, a base station is provided. The base station includes: a reception unit configured to receive, from a source secondary node, a condition for changing a primary secondary cell group cell; and a transmission unit configured to transmit the condition to a target secondary node. The reception unit receives, from the target secondary node, a message including the condition and a configuration related to a primary secondary cell group cell after the change, and the transmission unit transmits the message to a terminal.

### [ADVANTAGEOUS EFFECTS OF INVENTION]

According to the disclosed technique, a CPC (Conditional PSCell Change) can be implemented in a simple and useful manner in a wireless communication system.

### BRIEF DESCRIPTION OF THE DRAWINGS

[Fig. 1] Fig. 1 is a drawing illustrating a configuration example of a network architecture according to an embodiment of the present invention.
[Fig. 2] Fig. 2 is a drawing illustrating a configuration example of a wireless communication system according to an embodiment of the present invention.
[Fig. 3] Fig. 3 is a sequence diagram illustrating an example (1) of a conditional SN change.
[Fig. 4] Fig. 4 is a sequence diagram illustrating an example (2) of a conditional SN change.
[Fig. 5] Fig. 5 is a sequence diagram illustrating an example (3) of a conditional SN change.
[Fig. 6] Fig. 6 is a sequence diagram illustrating an example (4) of a conditional SN change.
[Fig. 7] Fig. 7 is a sequence diagram illustrating an example (5) of a conditional SN change.
[Fig. 8] Fig. 8 is a sequence diagram illustrating an example (1) of a conditional SN addition in an embodiment of the present invention.
[Fig. 9] Fig. 9 is a sequence diagram illustrating an example (2) of a conditional SN addition in an embodiment of the present invention.
[Fig. 10] Fig. 10 is a drawing illustrating an example of a functional structure of a base station 10 in an embodiment of the present invention.
[Fig. 11] Fig. 11 is a drawing illustrating an example of a functional structure of a terminal 20 in an embodiment of the present invention.
[Fig. 12] Fig. 12 is a drawing illustrating an example of a hardware structure of a base station 10 or a terminal 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, the above terms in NR correspond to NR-SS, NR-PSS, NR-SSS, NR-PBCH, NR-PRACH, NR-PDCCH, NR-PDSCH, NR-PUCCH, NR-PUSCH, and the like. However, even when a signal is used for NR, there may be a case in which the signal is not referred to as "NR- ".

In addition, in an embodiment of the present invention, the duplex method may be a TDD (Time Division Duplex) method, an FDD (Frequency Division Duplex) method, or any other method (e.g., Flexible Duplex, etc.,).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

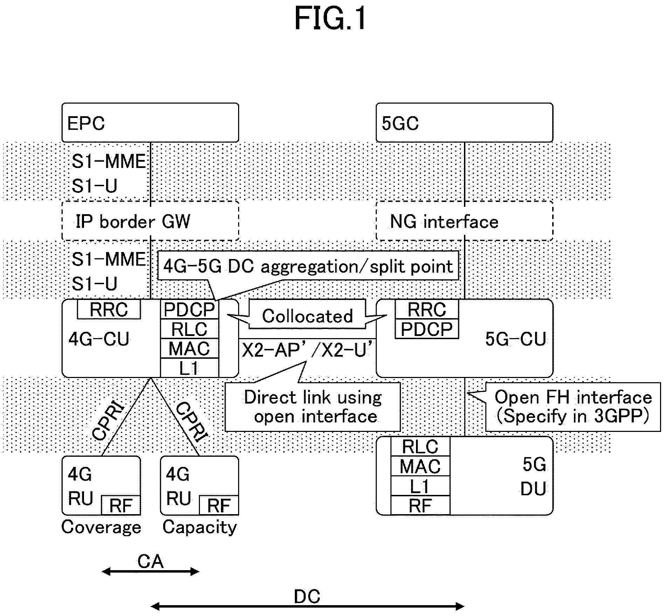

Fig. 1 is a drawing illustrating a configuration example of a network architecture according to an embodiment of the present invention. As illustrated in Fig. 1, a radio network architecture in an embodiment of the present invention includes 4G-CU, 4G-RU (Remote Unit, Remote Radio Station), EPC (Evolved Packet Core), etc., on the LTE-Advanced side. The radio network architecture in an embodiment of the present invention includes 5G-CU, 5G-DU, etc., on the 5G side.

As illustrated in Fig. 1, the 4G-CU includes layers of RRC (Radio Resource Control), PDCP (Packet Data Convergence Protocol), RLC (Radio Link Control), MAC (Medium Access Control), and L1 (layer 1, PHY layer, or physical layer), and is connected to the 4G-RU via CPRI (Common Public Radio Interface). A network node including the 4G-CU and the 4G-RU is referred to as eNB.

On the other hand, on the 5G side, as illustrated in Fig. 1, the 5G-CU includes an RRC layer, is connected to the 5G-DU through FH (Flonthaul) interface, and is connected to 5GC (5G Core Network) through NG interface. In addition, the 5G-CU is connected to the 4G-CU through X2 interface. The PDCP layer in the 4G-CU is a point of connection or separation in a case where 4G-5G DC (Dual Connectivity), i. e., EN-DC (E-UTRA-NR Dual Connectivity), is performed. A network node including the 5G-CU and the 5G-RU is referred to as gNB. In addition, the 5G-CU may be referred to as gNB-CU, and the 5G-DU may be referred to as gNB-DU.

In addition, as illustrated in Fig. 1, CA (Carrier Aggregation) is performed between 4G-RUs and DC is performed via the 4G-RU and the 5G-DU. Note that, though not shown in the figure, a UE (User Equipment) is wirelessly connected via RF of the 4G-RU or the 5G-DU, and transmits or receives packets.

Note that Fig. 1 illustrates a radio network architecture at the time of LTE-NR DC, i.e., EN-DC (E-UTRA-NR Dual Connectivity). However, the same radio network architecture may be used in a case where the 4G-CU is separated into CU-DU, or in a case where NR standalone operation is performed. In a case where the 4G-CU is separated into CU-DU, functions related to an RRC layer and a PDCP may be moved to the 4G-CU, and functions related to an RLC layer and layer(s) therebelow may be included in the 4G-DU. Note that the data rate of CPRI may be decreased due to the CU-DU separation. Note that eNB in EN-DC may be described as MN (Master Node), and gNB may be described as (Secondary Node).

Note that a plurality of 5G-DUs may be connected to the 5G-CU. In addition, NR-DC (NR-NR Dual Connectivity) may be performed by connecting the UE to a plurality of 5G-CUs, and NR-DC may be performed by connecting the UE to a plurality of 5G-DUs and a single 5G-CU. Note that a 5G-CU may be directly connected to EPC without using a 4G-CU, and a 4G-CU may be directly connected to 5GC without using 5G-CU.

In addition, Fig. 1 indicates, but is not limited to, a radio network architecture at the time of EN-DC. For example, the radio network architecture may indicate NR-DC or NE-DC (NR-EUTRA Dual Connectivity), or another radio network architecture may be adopted. Note that the radio network architecture need not be operated by DC, and may be operated standalone.

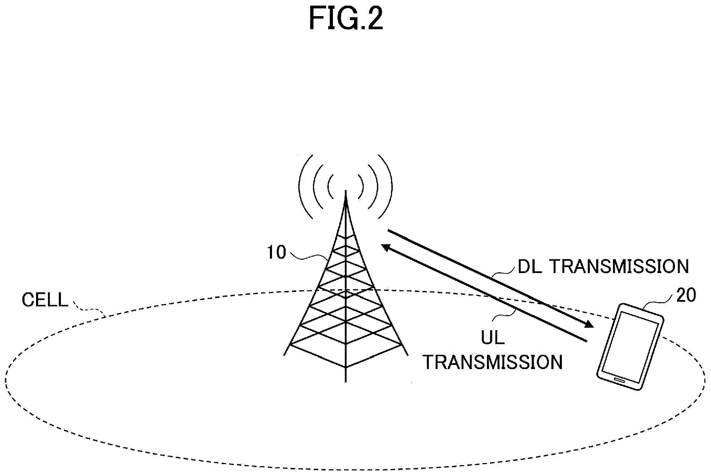

Fig. 2 is a drawing illustrating a configuration example of a wireless communication system according to an embodiment of the present invention. As illustrated in Fig. 2, a wireless communication system according to an embodiment of the present invention includes a base station 10 and a terminal 20. In Fig. 2, a single base station 10 and a single terminal 20 are illustrated as an example. There may be a plurality of base stations 10 and a plurality of terminals 20.

The base station 10 is a communication apparatus that provides one or more cells and performs wireless communications with the terminal 20. Physical resources of the radio signal may be defined in the time domain and the frequency domain, the time domain may be defined by the number of OFDM symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. As shown in Fig. 2, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, both the base station 10 and terminal 20 may perform communications via an SCell (Secondary Cell) and a PCell (Primary Cell) using CA (Carrier Aggregation).

The terminal 20 may be a communication apparatus that includes a wireless communication function such as a smart-phone, a mobile phone, a tablet, a wearable terminal, a communication module for M2M (Machine-to-Machine), or the like. As shown in FIG. 2, the terminal 20 uses various communication services provided by the wireless communication system by receiving control signals or data in DL from the base station 10 and transmitting control signals or data in UL to the base station 10.

Here, in NR Release 17, CPA (Conditional PSCell addition) has been discussed as an enhancement of MR-DC. The CPA is a function of autonomously performing SN addition in a case where the terminal 20 determines that the SN addition execution condition is satisfied by configuring the SN (Secondary node) addition in advance in the network. The CPA allows the SN to be configured faster than the conventional technique.

In addition, a function of autonomously performing the change in a case where the terminal determines that the change execution condition is satisfied by configuring PSCell change in advance in the network by CPC (Conditional PSCell Change), is being discussed. In the CPC, it is possible to quickly execute the process from the necessity determination of the change to the completion of the change as compared with the conventional PSCell change, and thus, an advantageous effect is expected on a countermeasure against "too late PSCell change" in which the change configuration of the terminal 20 is not in time and the SCG failure (Secondary Cell Group failure) occurs.

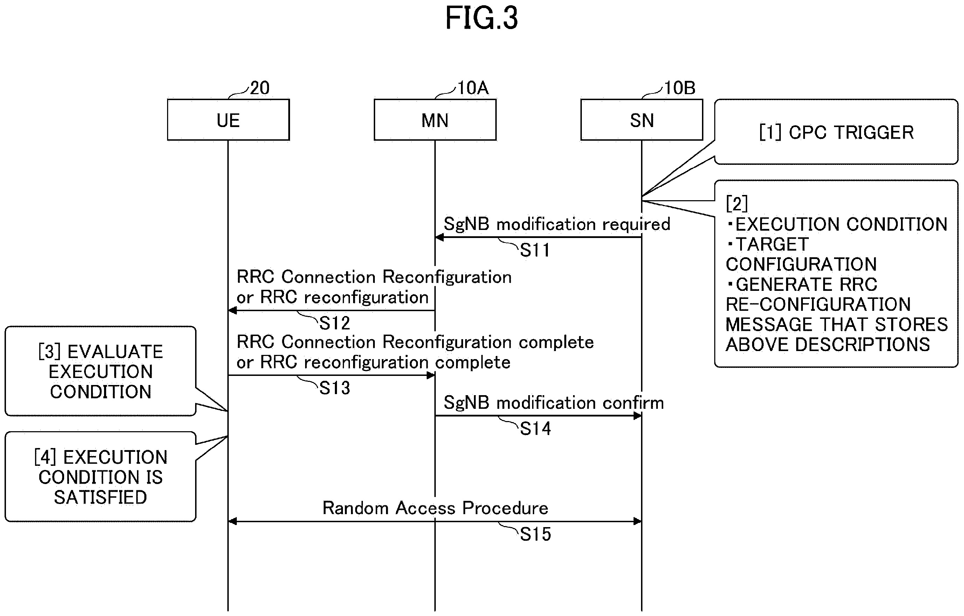

Fig. 3 is a sequence diagram illustrating an example (1) of an SN change. In the SN initiated intra-SN CPC specified in Release 16 shown in Fig. 3, all configurations are created by the SN. Before step S11, in the SN 10B, [1] the CPC trigger occurs, and [2] an RRC reconfiguration, which stores the execution condition and the target configuration, is generated.

The execution condition is a configuration in which how and which frequency is to be measured, and which condition is to be satisfied for performing CPC, are configured. The target configuration is a target PSCell configuration, and is a configuration to be configured in a case where the terminal 20 determines to perform.

In step S11, the SN 10B transmits the RRC reconfiguration message including the above-described execution condition and the target configuration, "SgNB modification required" , i.e., "SgNB change request" to the MN 10A.

In step S12, the MN 10A transmits "RRC Connection Reconfiguration" or "RRC reconfiguration" , i.e., "RRC connection reconfiguration" to the terminal 20. In subsequent step S13, the UE 20 transmits "RRC Connection Reconfiguration Complete" or "RRC reconfiguration complete" , i. e. , "RRC connection reconfiguration complete" to the MN 10A. In subsequent step S14, the MN 10A transmits "SgNB modification confirmed" , i.e., "SgNB change confirmation" to the SN 10B.

Subsequently, the UE 20 evaluates [3] the execution condition, based on the "RRC Connection Reconfiguration" or "RRC reconfiguration" . In addition, when [4] the execution condition is satisfied, in step S15, "Random Access Procedure" , i.e., "random access procedure" is performed with respect to the SN 10B. After completion of the random access procedure, the terminal 20 performs communication to which dual connectivity is applied, via PSCell after the change under the SN 10B and PCell under the MN 10A.

On the other hand, in the SN initiated inter-SN CPC specified in Release 17, there are a MN, a source SN (hereinafter, also referred to as S-SN), and a target SN (hereinafter, also referred to as T-SN), and thus, discussions are being held on which node is to create which configuration. Note that, in CPA or CPC, the addition-target PSCell candidates or change-destination PSCell candidates are configured by the network, and the terminal 20 determines which PSCell to be changed to, and thus, there is a possibility that the network performs configurations in advance for a plurality of PSCells. However, for the sake of simplicity, a single SN will be described. Hereinafter, the single SN described below may be replaced with multiple SNs that perform the same operations.

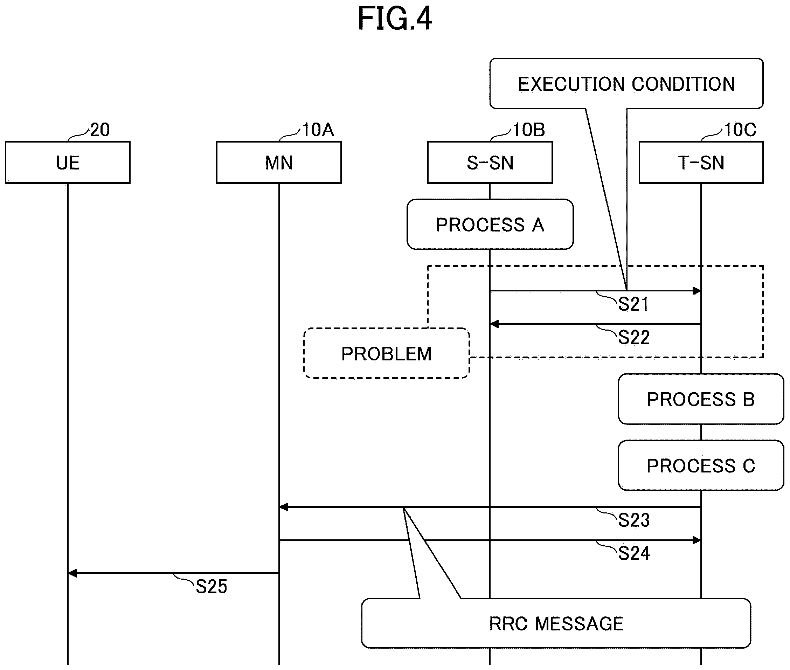

Hereinafter, options of the SN initiated inter-SN CPC will be described with reference to Fig. 4, Fig. 5, Fig. 6, and Fig. 7. The process A illustrated in each figure is a process of creating an execution condition. The process B illustrated in each figure is a process of creating a target PSCell configuration. The process C illustrated in each figure is a process of creating an RRC message including a conditional PSCell configuration by merging the execution condition and the target PSCell configuration.

In addition, an inter-node message in each figure is a message for storing an execution condition, a target PSCell configuration, or an RRC message (for example, RRC reconfiguration) in an existing message such as SgNB addition request or a similar new message, to be indicated.

Fig. 4 is a sequence diagram illustrating an example (2) of a conditional SN change. In the sequence illustrated in Fig. 4, a process A is performed in S-SN 10B. Subsequently, in step S21, the S-SN 10B transmits an execution condition to T-SN 10C. In subsequent step S22, the T-SN 10C transmits a response to the S-SN 10B, performs a process B and a process C, and creates an RRC message. In step S23, the T-SN 10C transmits the created RRC message to MN 10A. In subsequent step S24, the MN 10A transmits a response to the T-SN 10C. In subsequent step S25, the MN 10A realizes CPC by transmitting the RRC message to UE 20.

Here, the inter-SN messages in steps S21 and S22 require a new interface to be specified, and thus, there is a problem with a significant impact on the signaling in which new messages are to be specified. In addition, from an operational view point, a physical link must be developed for the CPC function alone. In addition, the specifications of the link need to be developed. In addition, it is difficult for gNB, which supports only EPC in EN-DC, to support XnAP protocol. In addition, because the number of nodes to communicate increases, the scale of vendor development increases and the cost increases. In addition, there is a case in which a device with a small upper limit of the number of SCTP (Stream Control Transmission Protocol) links may have difficulty implementing the function.

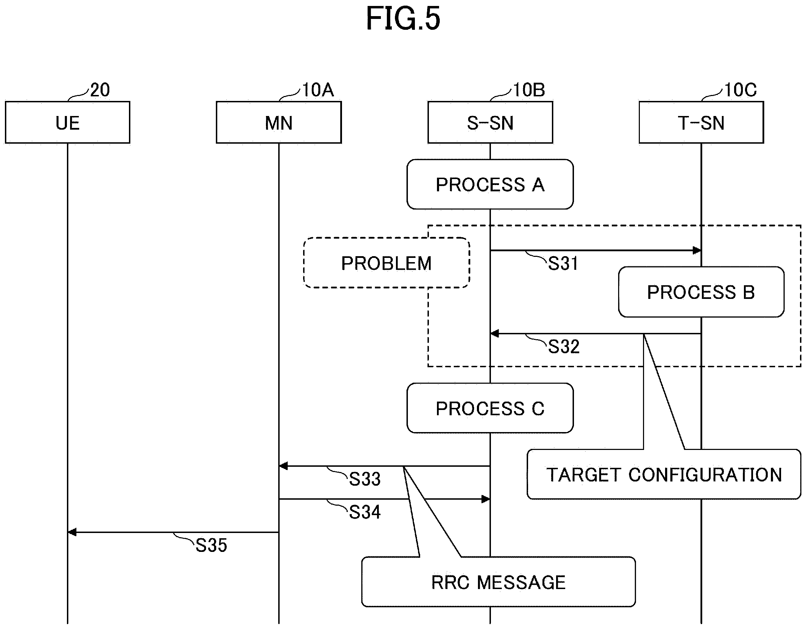

Fig. 5 is a sequence diagram illustrating an example (3) of a conditional SN change. In the sequence illustrated in Fig. 5, a process A is performed in S-SN 10B. Subsequently, in step S31, the S-SN 10B transmits a request for creating the target configuration to T-SN 10C. The T-SN 10C performs the process B. In subsequent step S32, the T-SN 10C transmits the target configuration to S-SN 10B. The S-SN 10B performs the process C and creates an RRC message. In step S33, the S-SN 10B transmits the created RRC message to MN 10A. In subsequent step S34, the MN 10A transmits a response to the S-SN 10B. In subsequent step S35, the MN 10A realizes CPC by transmitting the RRC message to UE 20.

Here, similar to steps S21 and S22 illustrated in Fig. 4, the inter-SN messages in steps S31 and S32 require a new interface to be specified, and thus, there is a problem with a significant impact on the signaling in which new messages are to be specified.

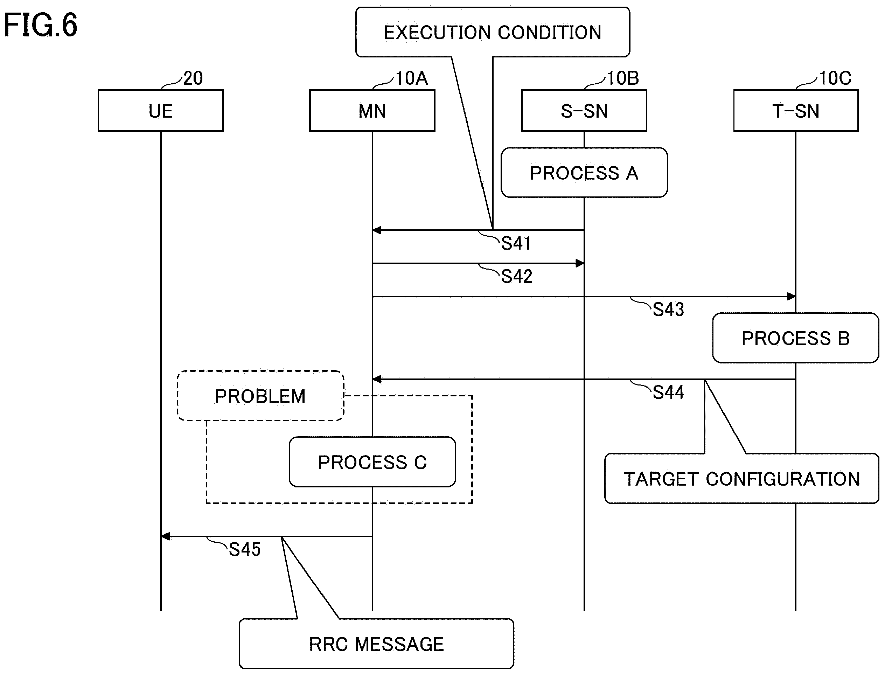

Fig. 6 is a sequence diagram illustrating an example (4) of a conditional SN change. In the sequence illustrated in Fig. 6, a process A is performed in S-SN 10B. Subsequently, in step S41, the S-SN 10B transmits an execution condition to MN 10A. In subsequent step S42, the MN 10A transmits a response to the S-SN 10B. In subsequent step S43, the MN 10A transmits a request for creating the target configuration to T-SN 10C. The T-SN 10C performs the process B. In subsequent step S44, the T-SN 10C transmits the target configuration to the MN 10A. The MN 10A performs the process C and creates an RRC message. In subsequent step S45, the MN 10A realizes CPC by transmitting the RRC message to UE 20.

Here, because the MN 10A performs the process C, the MN 10A needs to create an RRC message for performing the conditional PSCell reconfiguration. In a case of EN-DC, the MN 10A as eNB needs to configure the NR RRC reconfiguration, based on the NR configuration created by the S-SN 10B and the T-SN 10, that is, the execution condition and the target configuration. Therefore, there is a problem in that the eNB must create an NR RRC message.

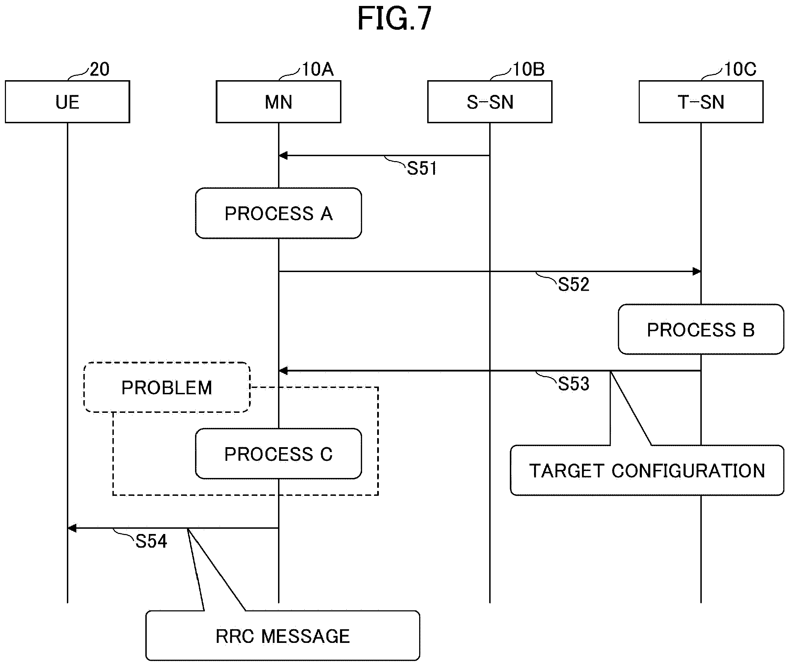

Fig. 7 is a sequence diagram illustrating an example (5) of a conditional SN change. In the sequence illustrated in Fig. 7, in step S51, the S-SN 10B transmits, to the MN 10A, a request for starting a process related to CPC. Subsequently, a process A is performed in the MN 10A. Subsequently, in step S52, the MN 10A transmits a request for creating the target configuration to T-SN 10C. The T-SN 10C performs the process B. In subsequent step S53, the T-SN 10C transmits the target configuration to the MN 10A. The MN 10A performs the process C and creates an RRC message. In subsequent step S54, the MN 10A realizes CPC by transmitting the RRC message to UE 20.

Here, similar to Fig. 6, because the MN 10A performs the process C, the MN 10A needs to create an RRC message for performing the conditional PSCell reconfiguration. In a case of EN-DC, the MN 10A as eNB needs to configure the NR RRC reconfiguration based on the NR configuration created by the S-SN 10B and the T-SN 10C, that is, the execution condition and the target configuration. Therefore, there is a problem in that the eNB must create an NR RRC message.

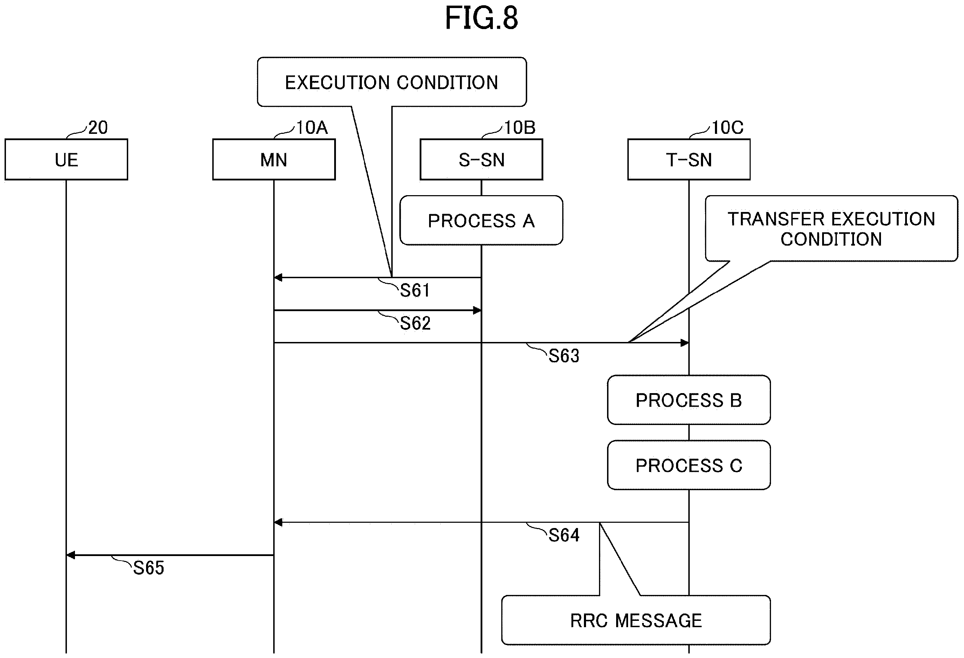

Accordingly, a method of realizing a CPC with the call flow shown in Fig. 8 is proposed, which solves the above-described problem. Fig. 8 is a sequence diagram illustrating an example (1) of a conditional SN change in an embodiment of the present invention. In the sequence illustrated in Fig. 8, a process A is performed in S-SN 10B. Subsequently, in step S61, the S-SN 10B transmits an execution condition to MN 10A. In subsequent step S62, the MN 10A transmits a response to the S-SN 10B. In subsequent step S63, the MN 10A transfers the execution condition to the T-SN 10C. The T-SN 10C performs the process B and further performs the process C. In subsequent step S64, the T-SN 10C transmits the created RRC message to the MN 10A. In subsequent step S65, the MN 10A realizes CPC by transmitting an RRC message including the RRC message created by the T-SN 10C to UE 20.

By realizing CPC with the call flow illustrated in Fig. 8, the interface between the S-SN and the T-SN needs not be specified. In addition, the MN needs not to create an RRC message of conditional PSCell reconfiguration, and only needs to transfer the received RRC message.

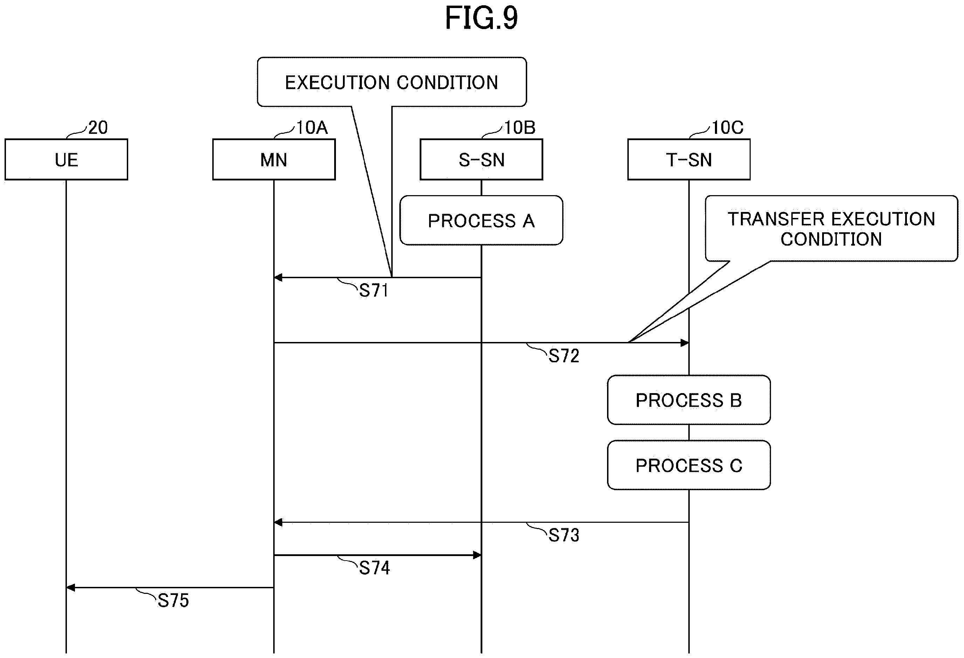

In addition, CPC may be realized according to the call flow illustrated in Fig. 9 below. Fig. 9 is a sequence diagram illustrating an example (2) of a conditional SN change in an embodiment of the present invention. In the sequence illustrated in Fig. 9, a process A is performed in S-SN 10B. Subsequently, in step S71, the S-SN 10B transmits an execution condition to MN 10A. In subsequent step S72, the MN 10A transfers the execution condition to T-SN 10C. The T-SN 10C performs the process B and further performs the process C. In subsequent step S73, the T-SN 10C transmits the created RRC message to the MN 10A. In subsequent step S74, the MN 10A transmits a response to the S-SN 10B. In subsequent step S75, the MN 10A realizes CPC by transmitting an RRC message including the RRC message created by the T-SN 10C to UE 20.

By realizing CPC according to the call flow illustrated in Fig. 9, in a case where the T-SN wants to reject the PSCell change, after transmission of the rejection message to the MN, the MN can indicate the rejection by the S-SN in step S74, and thus, the call flow can be realized with decreased messages that are one message less than that of the call flow illustrated in Fig. 8.

Note that, in Fig. 8 and Fig. 9, in a case where, after receiving the RRC message, the UE 20 evaluates the execution condition and the execution condition is satisfied, the UE 20 may perform the random access procedure with respect to the T-SN 10C.

In the call flow illustrated in Fig. 8 or Fig. 9, regarding the messages between the MN and the S-SN or between the MN and the T-SN, existing messages as shown below may be used, or new X2 or Xn messages may be specified.

Existing X2 or Xn messages:
SgNB addition request, SgNB addition request acknowledge
SN addition request, SN addition request acknowledge
SgNB release request, SgNB release request acknowledge
SgNB release required, SgNB release confirm
SN release request, SN release request acknowledge
SN release required, SN release confirm
SgNB modification request, SgNB modification request acknowledge
SgNB modification required, SgNB modification confirm
SN modification request, SN modification request acknowledge
SN modification required, SN modification confirm

Note that the message, which is used by the MN for indicating the configuration to the UE, may be an existing message (for example, RRC reconfiguration, RRC Connection Reconfiguration), or a new RRC message.

Note that the gNB, which transmits an RRC message including the execution condition, the target PSCell configuration or the conditional PSCell configuration, may be a single node or may be multiple nodes in a case where there are multiple candidates.

Note that, in a case where multiple candidates of PSCells belong to the same node, a message may be transmitted for each PSCell, or messages may be collectively indicated to a single node.

Note that the execution condition may be an existing information element (condExecutionCond-r16), or may be a new information element. The target PSCell configuration may be an existing information element (condRRCReconfig-r16), or may be a new information element. The conditional PSCell configuration may be an existing information element (ConditionalReconfiguration-R16) to be included in an existing message (RRC reconfiguration), may be a new information element, or may be included in a new message.

According to the above-described embodiments, the terminal 20 can realize CPC without requiring the message exchange between the SNs and without requiring the RRC message creation by the MN.

That is, CPC (Conditional PSCell Change) can be implemented in a simple and useful manner in a wireless communication system.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

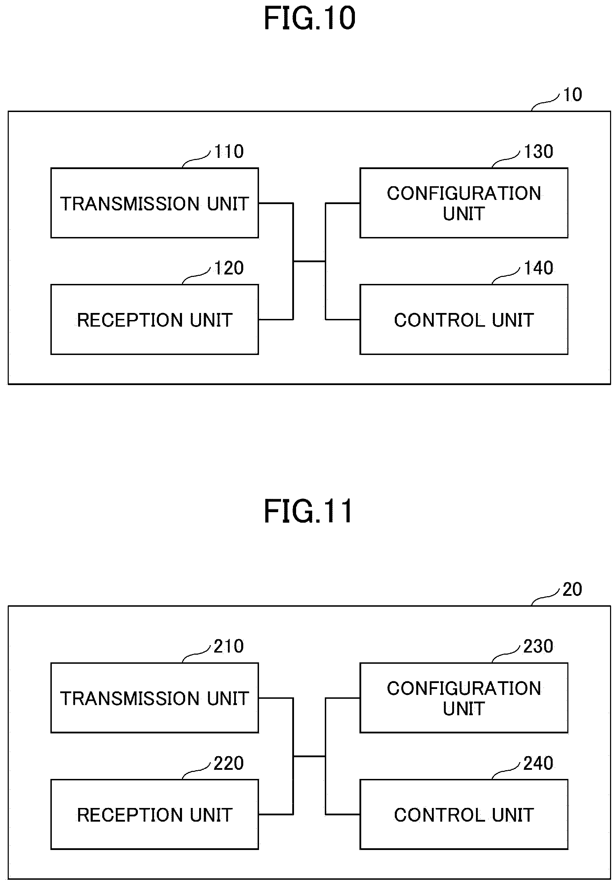

Fig. 10 is a drawing illustrating an example of a functional structure of a base station 10 according to an embodiment of the present invention. As shown in Fig. 10, the base station 10 includes a transmission unit 110, a reception unit 120, a configuration unit 130, and a control unit 140. The functional structure illustrated in Fig. 10 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the dual connectivity configuration of the terminal 20.

The control unit 140 performs control related to processing of the dual connectivity as described in the embodiments. Further, the control unit 140 controls communications with the terminal 20 based on the radio-parameter-related UE capability report that is received from the UE 20. The functional units related to signal transmission in the control unit 140 may be included in the transmission unit 110, and the functional units related to signal reception in the control unit 140 may be included in the reception unit 120.

### <Terminal 20>

Fig. 11 is a drawing illustrating an example of a functional structure of a terminal 20 according to an embodiment of the present invention. As shown in FIG. 11, the terminal 20 includes a transmission unit 210, a reception unit 220, a configuration unit 230, and a control unit 240. The functional structure illustrated in Fig. 11 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 120 receives, from another terminal 20, PSCCH, PSSCH, PSDCH, or PSBCH.

The configuration unit 230 stores various configuration information items received by the reception unit 220 from the base station 10. In addition, the configuration unit 230 stores pre-configured configuration information. Contents of the configuration information are, for example, information related to the dual connectivity configuration.

The control unit 240 performs control related to the dual connectivity as described in the embodiments. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 10 and Fig. 11), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

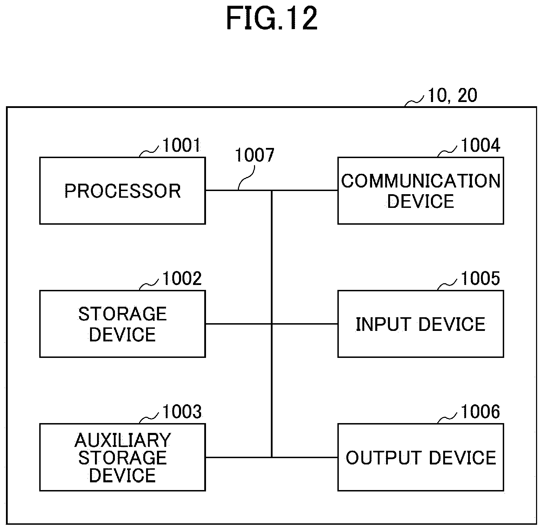

For example, the base station 10, terminal 20, etc., according to an embodiment of the present disclosure may function as a computer for processing the radio communication method of the present disclosure. Fig. 12 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 10 may be realized by control programs that are stored in the storage device 1002 and are executed by the processor 1001. Further, for example, the control unit 240 of the terminal 20 illustrated in Fig. 11 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e. g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a base station is provided. The base station includes: a reception unit configured to receive, from a source secondary node, a condition for changing a primary secondary cell group cell; and a transmission unit configured to transmit the condition to a target secondary node. The reception unit receives, from the target secondary node, a message including the condition and a configuration related to a primary secondary cell group cell after the change, and the transmission unit transmits the message to a terminal.

According to the above configuration, the terminal 20 can realize CPC without requiring the message exchange between the SNs and without requiring the RRC message creation by the MN. That is, CPC (Conditional PSCell Change) can be implemented in a simple and useful manner in a wireless communication system.

In a case where the reception unit receives information indicating rejection of changing the primary secondary cell group cell in response to transmission of the condition to the target secondary node, the transmission unit may transmit the information indicating the rejection to the source secondary node as a response to the source secondary node that has received the condition. According to the above configuration, the terminal 20 can realize CPC without requiring the message exchange between the SNs and without requiring the RRC message creation by the MN.

In addition, according to an embodiment of the present invention, a terminal is provided. The terminal includes: a reception unit configured to receive, from a master node, a message including a condition for changing a primary secondary cell group cell and a configuration related to a primary secondary cell group cell after the change; a control unit configured to determine whether the condition is satisfied; and a transmission unit configured to perform a random access procedure to the primary secondary cell group cell after the change, based on the configuration, in a case where the condition is satisfied, wherein the condition is created by a source secondary node, and the configuration and the message are created by a target secondary node.

According to the above configuration, the terminal 20 can realize CPC without requiring the message exchange between the SNs and without requiring the RRC message creation by the MN. That is, CPC (Conditional PSCell Change) can be implemented in a simple and useful manner in a wireless communication system.

As described above, according to an embodiment of the present invention, a base station is provided. The base station includes: a reception unit configured to receive, from a source secondary node via a master node, a condition for changing a primary secondary cell group cell; a control unit configured to create a message including the condition and a configuration related to a primary secondary cell group cell after the change; and a transmission unit configured to transmit the message to the master node.

According to the above configuration, the terminal 20 can realize CPC without requiring the message exchange between the SNs and without requiring the RRC message creation by the MN. That is, CPC (Conditional PSCell Change) can be implemented in a simple and useful manner in a wireless communication system.

In addition, according to an embodiment of the present invention, a communication method performed by a base station is provided. The communication method includes: receiving, from a source secondary node, a condition for changing a primary secondary cell group cell; transmitting the condition to a target secondary node; receiving, from the target secondary node, a message including the condition and a configuration related to a primary secondary cell group cell after the change; and transmitting the message to a terminal.

According to the above configuration, the terminal 20 can realize CPC without requiring the message exchange between the SNs and without requiring the RRC message creation by the MN. That is, CPC (Conditional PSCell Change) can be implemented in a simple and useful manner in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL)) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e. g. , three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "determining" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc. may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in an RB may be determined based on the numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Note that, in the present disclosure, the execution condition is an example of a condition for changing the primary secondary cell group cell. The target configuration or the target PSCell configuration is an example of a configuration related to the primary secondary cell group cell after the change.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A base station comprising:
a reception unit configured to receive, from a source secondary node, a condition for changing a primary secondary cell group cell; and
a transmission unit configured to transmit the condition to a target secondary node, wherein
the reception unit receives, from the target secondary node, a message including the condition and a configuration related to a primary secondary cell group cell after the change, and
the transmission unit transmits the message to a terminal.

2. The base station as claimed in claim 1, wherein
in a case where the reception unit receives information indicating rejection of changing the primary secondary cell group cell in response to transmission of the condition to the target secondary node, the transmission unit transmits the information indicating the rejection to the source secondary node as a response to the source secondary node that has received the condition.

3. A terminal comprising:
a reception unit configured to receive, from a master node, a message including a condition for changing a primary secondary cell group cell and a configuration related to a primary secondary cell group cell after the change;
a control unit configured to determine whether the condition is satisfied; and
a transmission unit configured to perform a random access procedure to the primary secondary cell group cell after the change, based on the configuration, in a case where the condition is satisfied, wherein
the condition is created by a source secondary node, and the configuration and the message are created by a target secondary node.

4. A base station comprising:
a reception unit configured to receive, from a source secondary node via a master node, a condition for changing a primary secondary cell group cell;
a control unit configured to create a message including the condition and a configuration related to a primary secondary cell group cell after the change; and
a transmission unit configured to transmit the message to the master node.

5. A communication method performed by a base station, the communication method comprising:
receiving, from a source secondary node, a condition for changing a primary secondary cell group cell;
transmitting the condition to a target secondary node;
receiving, from the target secondary node, a message including the condition and a configuration related to a primary secondary cell group cell after the change; and
transmitting the message to a terminal.
